# EUROPEAN PATENT APPLICATION

(11) **EP 4 435 636 A1**
(43) Date of publication of application: **25.09.2024**
(21) Application number: 23791115.1
(22) Date of filing: 13.04.2023
(51) Int. Cl.: G06F 16/958, G06F 3/0481

(54) **PAGE DISPLAY METHOD AND APPARATUS, ELECTRONIC DEVICE, STORAGE MEDIUM AND PROGRAM PRODUCT**

(30) Priority: 19.04.2022 CN 202210411601
(71) Applicant: Beijing Zitiao Network Technology Co., Ltd., Beijing 100190 (CN)
(72) Inventor: CHEN, Yue, Beijing 100086 (CN); DING, Qiannan, Beijing 100086 (CN)
(74) Representative: Dentons UK and Middle East LLP
(86) International application number: PCT/CN2023/088041
(87) International publication number: WO 2023/202460

(57) **Abstract**

Embodiments of the present disclosure provide a page display method and apparatus, an electronic device, a storage medium and a program product. The method comprises: receiving a trigger operation acting on a video playback page, wherein the trigger operation is configured to instruct to display an object page, a first page and a second page are aggregated in the object page, the first page is configured to play back an object recommendation video, and the second page is configured to display object information and first virtual article information associated with the object information; and in response to the trigger operation, switching a current display page from the video playback page to a target page aggregated in the object page, and displaying page identifiers of at least two pages aggregated in the object page in a first region (40) of the target page, wherein the target page is the first page or the second page.

## Description

The present disclosure claims priority of the Chinese Patent Application No. 202210411601.6 filed with the Chinese Patent Office on April 19, 2022, the entire disclosure of which is incorporated by reference in the present disclosure.

### TECHNICAL FIELD

Embodiments of the present disclosure relate to the field of computer technology, for example, to a method and apparatus for page display, an electronic device, a storage medium and a program product.

### BACKGROUND

Currently, a user may watch a video in the home page of a video application software, and through a series of triggering operations, enter a mall page to view the merchandise or enter a recommendation page to watch a recommended video related to the merchandise.

However, in the related technology, the operation of entering the mall page or the recommendation page from the home page is cumbersome, resulting in a poor user experience.

### SUMMARY

Embodiments of the present disclosure provide a method and apparatus for page display, an electronic device, a storage medium, and a program product to simplify an operation required to switch to a mall page and a recommendation page associated with a merchandise.

In a first aspect, an embodiment of the present disclosure provides a method for page display, including:
receiving a triggering operation acting on a video playing page, where the triggering operation is configured to instruct to display an object page, a first page and a second page are aggregated in the object page, the first page is configured to play an object recommendation video and the second page is configured to present object information and first virtual item information associated with the object information; and
in response to the triggering operation, switching a current display page from the video playing page to a target page aggregated in the object page, and displaying page identifiers of at least two pages aggregated in the object page in a first area of the target page, the target page being the first page or the second page.

In a second aspect, an embodiment of the present disclosure further provides an apparatus for page display, including:
an operation receiving module, configured to receive a triggering operation acting on a video playing page, where the triggering operation is configured to instruct to display an object page, a first page and a second page are aggregated in the object page, the first page is configured to play an object recommendation video and the second page is configured to present object information and first virtual item information associated with the object information; and
a page display module, configured to, in response to the triggering operation, switch a current display page from the video playing page to a target page aggregated in the object page and display page identifiers of at least two pages aggregated in the object page in a first area of the target page, where the target page is the first page or the second page.

In a third aspect, an embodiment of the present disclosure further provides an electronic device, including:
at least one processor;
a memory configured to store at least one program,
when the at least one program are executed by the at least one processor, causing the at least one processor to implement the method for page display according to the embodiments of the present disclosure.

In a fourth aspect, an embodiment of the present disclosure further provides a computer-readable storage medium, and the computer programs when executed by a processor, implements the method for page display according to the embodiments of the present disclosure.

In a fifth aspect, an embodiment of the present disclosure further provides a computer program product, the computer program product when executed by a computer, causes the computer to implement the method for page display according to the embodiments of the present disclosure.

### BRIEF DESCRIPTION OF DRAWINGS

Fig. 1 is a flowchart of a method for page display provided in an embodiment of the present disclosure;
Fig. 2 is a schematic diagram of a display of an object page identifier provided in an embodiment of the present disclosure;
Fig. 3 is a schematic diagram of a display of another object page identifier provided in an embodiment of the present disclosure;
Fig. 4 is a schematic diagram of a display of a target page provided in an embodiment of the present disclosure;
Fig. 5 is a schematic diagram of a display of another target page provided in an embodiment of the present disclosure;
Fig. 6 is a flowchart of another method for page display provided in an embodiment of the present disclosure;
Fig. 7 is a schematic diagram of a display of yet another target page provided in an embodiment of the present disclosure;
Fig. 8 is a structural block diagram of an apparatus for page display provided in an embodiment of the present disclosure; and
Fig. 9 is a structural schematic diagram of an electronic device provided in an embodiment of the present disclosure.

### DETAILED DESCRIPTION

The term "including" and variations thereof used in this article are open-ended inclusion, namely "including but not limited to". The term "based on" refers to "at least partially based on". The term "one embodiment" means "at least one embodiment"; the term "another embodiment" means "at least one other embodiment"; and the term "some embodiments" means "at least some embodiments". Relevant definitions of other terms may be given in the description hereinafter.

It should be noted that concepts such as "first" and "second" mentioned in the present disclosure are only used to distinguish different apparatuses, modules or units, and are not intended to limit orders or interdependence relationships of functions performed by these apparatuses, modules or units.

It should be noted that modifications of "one" and "more" mentioned in the present disclosure are schematic rather than restrictive, and those skilled in the art should understand that unless otherwise stated in the context, it should be understood as "at least one".

Names of messages or information exchanged between a plurality of apparatuses in embodiments of the present disclosure are only used for description and not meant to limit the scope of these messages or information.

It can be understood that before using the technical solution disclosed by the embodiments of the present disclosure, the user should be informed of the type, the use scope, the use scenario, and the like of the personal information to which the present disclosure relates and obtain the authorization of the user in an appropriate manner according to the relevant laws and regulations.

For example, in response to receiving the user's active request, prompt information is sent to the user to explicitly prompt the user that the operation requested to be performed by the user will require acquisition and use of personal information to the user. Thus, it is possible for the user to autonomously select whether to provide personal information to a software or a hardware such as an electronic device, an application program, a server, or a storage medium, which performs the operations of the disclosed technical solution, according to the prompt information.

As an alternative but non-limiting implementation, the manner in which the prompt information is sent to the user in response to receiving the user's active request may be, for example, in the form of a pop-up window in which the prompt information may be presented in the form of text. In addition, the pop-up window may also bear a selection control for the user to select "agree" or "disagree" to provide personal information to the electronic device.

It is to be understood that the above-described notification and acquiring the user authorization process is merely illustrative and does not constitute a limitation to implementations of the present disclosure, and that other ways of satisfying the relevant laws and regulations may be applied to implementations of the present disclosure.

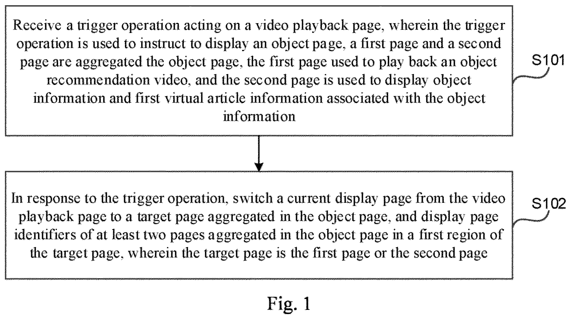

Fig. 1 is a flowchart of a method for page display provided in an embodiment of the present disclosure. The method may be performed by an apparatus for page display, where the apparatus may be implemented by at least one of a software and a hardware, and may be configured in an electronic device, for example, may be configured in a mobile phone or a tablet computer. The method for page display provided by the embodiment of the present disclosure is applicable to a scene of switching into a page related to an object by a video playing page. As shown in Fig. 1, the method for page display provided by the present embodiment may include:

S101, receiving a triggering operation acting on a video playing page, where the triggering operation is configured to instruct to display an object page, a first page and a second page are aggregated in the object page, the first page is configured to play an object recommendation video and the second page is configured to present object information and first virtual item information associated with the object information.

The video playing page may be a page for playing a video determined based on a preset rule that is not related to an object, such as a recommended video playing page for playing a video recommended to the current user based on a video recommendation rule, a same-city video playing page for playing a video that is determined based on a geographic location in which the current user and the video publisher are located with authorization by the current user and the video publisher, or a followed-user video playing page for playing a video published by a video publisher (e.g. a video publisher that is followed by the current user) that is in association with the current user, and the like.

The object page may be an aggregation page related to the object, in which a plurality of pages related to the object may be aggregated, such as a first page for playing an object recommendation video or a second page for presenting object information and first virtual item information associated with the object information. Optionally, the object page is further aggregated with a third page configured to present an object recommendation video published by a target associated user, the target associated user being an associated user of the current user.

The object may be an item object (e.g. a merchandise item), and the item object may be a real item object or a virtual item object. The object recommendation video may be understood as a video for making the object recommendation, and the object recommendation video may be a video that is pre-produced and published, and may also be a live video. The target associated user may be a specific video publisher that is associated with the current user, such as a merchant (e.g., a merchant followed/favorite by the current user) associated with the current user, or the like. Illustratively, the first page may be a page for playing object recommendation videos published by different video publishers (including object recommendation videos published by video publishers other than the merchant followed by the current user). The second page may be a mall page in which the object information of the plurality of objects and the first virtual item information associated with the plurality of object information may be presented. The third page may be a page for playing an object recommendation video published by the merchant followed by the target associated user.

The object recommendation videos played in the first page and the third page may be object recommendation videos for the same object or different objects, optionally recommended videos for different objects. The shops corresponding to the object information presented in the second page may include a plurality of shops, i.e., the second page may be configured to present object information for objects in different shops. In addition to displaying the object information and the first virtual item information associated with the object information, optionally, second virtual item information to be collected is further presented in the second page. The first virtual item information may be understood as virtual item information associated with the object information, i.e., information of a virtual item (e.g., points or gold coins, etc.) associated with the object corresponding to the object information, which is available for collection by the current user when a certain condition is satisfied, e.g., the current user can collect the virtual item associated with the object after purchasing the object. The second virtual item information may be information of a virtual item to be collected by the current user, and the current user may collect the corresponding virtual item by triggering the second virtual item information displayed in the second page.

Exemplarily, the current user watches a video in the video playing page, and performs a triggering operation to display the object page in the video playing page when desiring to switch into the object page. Thus, the electronic device may receive the triggering operation performed by the current user in the video playing page.

In the present embodiment, the triggering operation to display the object page may be understood as an operation of displaying pages related to the object aggregated in the object page, and the triggering operation may be set as desired. Exemplarily, the triggering operation may be a preset triggering gesture for instructing to display the object page, and may also be a triggering operation for triggering a page identifier (i.e., object page identifier) displayed in the video playing page and corresponding to the object page.

In an implementation, the video playing page is aggregated in a preset page, and the triggering operation acts on an object page identifier, the object page identifier is displayed in a second area in which a page identifier of the video playing page is located, or in a third area in which a page identifier of the preset page is located.

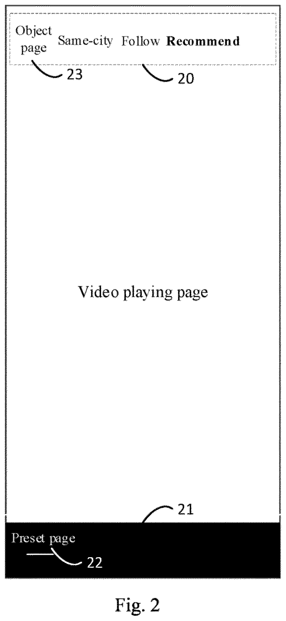

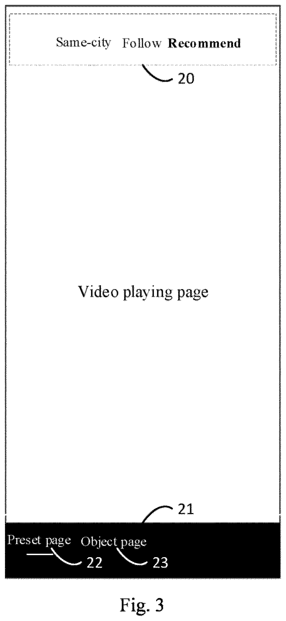

In the above implementation, the video playing page may be a video playing page aggregated in a preset page (e.g., a home page, etc.) of a video application software, i.e., the video playing page may be aggregated in the preset page. In other words, the preset page may be aggregated with at least one page, such as aggregated with at least one video playing page. When the video playing page is displayed, page identifiers corresponding to the plurality of pages aggregated in the preset page may be displayed in the second area 20 of the video playing page, such as page identifier "same-city" for the same city video playing page, the page identifier "follow" for the followed-user video playing page, and the page identifier "recommend" for the recommended video playing page, as shown in FIGs. 2 and 3. And the page identifier 22 of the preset page may be displayed in the third area 21 of the video playing page, as shown in FIGs. 2 and 3. In addition, at least one of the second area and the third area may have other page identifiers or controls displayed therein.

In the present embodiment, the object page may or may not be aggregated within the preset page, and the corresponding page identifier of the object page (i.e., object page identifier) may be displayed in the second area or the third area of the video playing page, which is not limited in this embodiment.

In order to improve the ordering of the object page identifier 23 with other page identifiers than the object page identifier 23 displayed in the video playing page, optionally, when the object page is aggregated within the preset page, the object page identifier 23 corresponding to the object page may be displayed in the second area 20 of the video playing page, as shown in Fig. 2. When the object page is not aggregated within the preset page, the object page identifier 23 corresponding to the object page may be displayed in the third area 21 of the video playing page, as shown in Fig. 3.

S102, in response to the triggering operation, switching a current display page from the video playing page to a target page aggregated in the object page, and displaying page identifiers of at least two pages aggregated in the object page in a first area of the target page, the target page being the first page or the second page.

The target page may be understood as a page aggregated in the object page that is presented by default when switching from other pages to the object page, the target page may be any page aggregated in the object page, for example, may be set as desired, e.g., the first page or the second page may be set as the target page directly regardless of the arrangement order of the page identifiers in the first area. The arrangement order of the page identifiers in the first area may also be considered, and the page corresponding to the nth (n is a positive integer) page identifier in the arrangement order may be taken as the target page. The following will be described using the target page as the page corresponding to the first page identifier displayed in the first area as an example.

Exemplarily, the electronic device may switch the currently displayed page from the video playing page to the target page and display page identifiers of at least two pages aggregated in the object page in the first area of the target page when receiving a triggering operation to display the object page. For example, when the page identifiers of the pages aggregated in the object page may be completely presented in the first area, the page identifiers of the pages aggregated in the object page (including the first page and the second page) may be presented in the first area. When the page identifiers of the aggregated pages in the object page cannot be presented completely in the first area, at least two page identifiers including the page identifier of the target page may be presented in the first area.

In an alternative implementation, the target page and the display order of the page identifiers in the first area may be set depending on whether the target page is aggregated within the preset page.

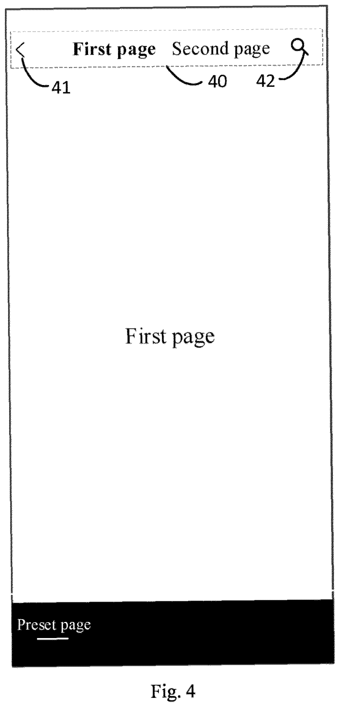

Illustratively, when the object page is aggregated in the preset page, the first page may be set as the target page, i.e., the page identifier corresponding to the first page may be set as the first page identifier displayed in the first area 40. Thus, when a triggering operation to display the object page is received, it is possible to switch the currently displayed page from the video playing page to the first page, display the page identifier corresponding to the first page as the first page identifier in the first area 40, and display the page identifier corresponding to other pages (e.g. the second page) aggregated in the object page after the page identifier corresponding to the first page, as shown in Fig. 4.

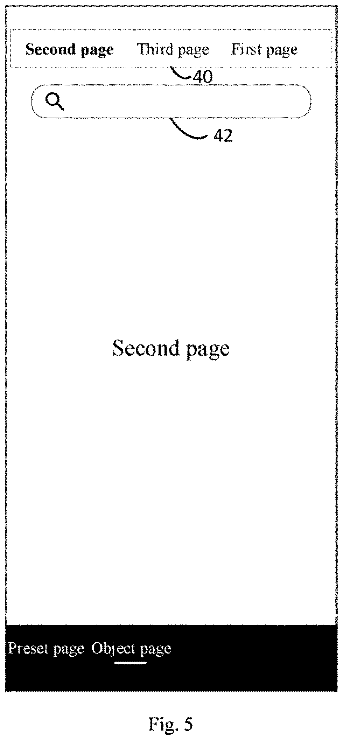

When the object page is not aggregated in the preset page, the second page may be set as the target page, i.e., the page identifier corresponding to the second page may be set as the first page identifier displayed in the first area 40. Thus, when a triggering operation to display the object page is received, it is possible to switch the currently displayed page from the video playing page to the second page, display the page identifier corresponding to the second page as the first page identifier in the first area 40, and display the page identifier corresponding to other pages (e.g., at least one of the third page and the first page) aggregated in the object page after the page identifier corresponding to the second page, as shown in Fig. 5.

In the present embodiment, a plurality of pages (e.g., a first page, a second page, etc.) related to an object are aggregated into an object page, and upon receiving a corresponding triggering operation acting on the video playing page, a target page aggregated in the object page is switched to be displayed, and page identifiers of the pages aggregated in the object page are displayed in the target page, so that a user can switch into the object page and view the pages aggregated in the object page as desired by performing a simple triggering operation on the video playing page. As compared with the technical solution in which a plurality of pages associated with an object are scattered and the plurality of pages have different switching paths, it is possible to improve aggregation at the time of display between the plurality of pages associated with an object, and to shorten operation paths at the time of entering the plurality of pages associated with an object, for example, to shorten switching paths between different pages associated with an object, to simplify operations required for entering pages (e.g., the first page, the second page, and the like) associated with an object, and to improve user experience.

In an implementation, when the object page is aggregated in the same page (i.e., the preset page) as the currently displayed video playing page, when the object page identifier corresponding to the object page is displayed within the second area of the video playing page, after switching into the object page based on the triggering operation of the current user in the video playing page, in addition to displaying the page identifiers of the plurality of pages aggregated in the object page in the first area, a return control may further be displayed in the first area, so as to facilitate the current user returning to the video playing page by the object page. After switching into the object page based on the triggering operation of the current user in the video playing page, the target page may be displayed, or any one page (including the target page and other pages other than the target page) aggregated in the object page may be displayed. At this time, optionally, the object page identifier is displayed in the second area, and displaying page identifiers of at least two pages aggregated in the object page in the first area of the target page includes: displaying a return control and page identifiers of pages aggregated in the object page in the first area of the target page, the return control being configured to trigger to display the video playing page.

Exemplarily, as shown in Fig. 4, the electronic device switches the currently displayed page from the video playing page to the target page (e.g., the first page) upon receiving the triggering operation to display the object page, displays the return control 41 in the first area 40 of the target page together with the page identifier corresponding to the page aggregated in the object page. For example, the return control 41 is displayed in front of the page identifier corresponding to the target page in the first area 40. Thus, the current user can instruct the electronic device to switch the current display page to the video playing page by triggering the return control 41, such as clicking the return control 41, or sliding laterally in the main display area (for the case where the current display page is the target page), such as sliding to the right. Accordingly, one of the following conditions is satisfied to switch the currently displayed page to the video playing page aggregated in the preset page: when the electronic device detects the user triggering the return control 41; or when a triggering operation of the user sliding rightward in the main display area of the target page is received when the target page is displayed.

It needs to be explained that when there are a plurality of video playing pages aggregated in the preset page, the returned video playing page may be the video playing page displayed when the triggering operation to display the object page in S 101 is received, or it may be a preset video playing page (e.g. a recommended video playing pages) aggregated in the preset page, which is not limited in the present embodiment.

The method for page display provided by the present embodiment, receiving a triggering operation acting on a video playing page, where the triggering operation is configured to instruct to display an object page, a first page and a second page are aggregated in the object page, the first page is configured to play an obj ect recommendation video and the second page is configured to present object information and first virtual item information associated with the object information; and in response to the triggering operation, switching a current display page from the video playing page to a target page aggregated in the object page, and displaying page identifiers of at least two pages aggregated in the object page in a first area of the target page, the target page being the first page or the second page. The present embodiment, by adopting the above technical solution, aggregates a plurality of pages related to an object into an object page, and switches displaying the object page upon receiving a corresponding triggering operation acting on a video playing page, enables simplifying an operation required for switching into a page related to an object, and improves user experience.

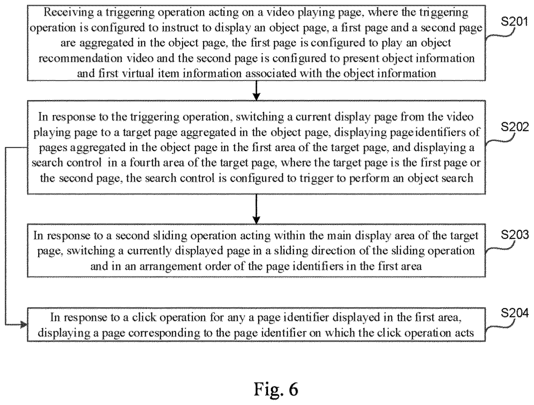

Fig. 6 is a flowchart of another method for page display provided in an embodiment of the present disclosure. The solution in the present embodiment may be combined with at least one optional solution in the above embodiments. Optionally, displaying the page identifiers of the at least two pages aggregated in the object page in the first area of the target page includes: displaying the page identifiers of the pages aggregated in the object page in the first area of the target page, and displaying a search control 42 in a fourth area of the target page, the search control 42 being configured to trigger to perform an object search.

Optionally, after displaying page identifiers of at least two pages aggregated in the object page in a first area of the target page, the method further includes at least one of: in response to a second sliding operation acting within the main display area of the target page, switching a currently displayed page in a sliding direction of the sliding operation and in an arrangement order of the page identifiers in the first area; or in response to a click operation for any a page identifier displayed in the first area, displaying a page corresponding to the page identifier on which the click operation acts.

Accordingly, as shown in Fig. 6, the method for page display provided by the present embodiment may include:

S201, receiving a triggering operation acting on a video playing page, where the triggering operation is configured to instruct to display an object page, a first page and a second page are aggregated in the object page, the first page is configured to play an object recommendation video and the second page is configured to present object information and first virtual item information associated with the object information.

S202, in response to the triggering operation, switching a current display page from the video playing page to a target page aggregated in the object page, displaying page identifiers of pages aggregated in the object page in the first area of the target page, and displaying a search control 42 in a fourth area of the target page, performing S203 or S204, where the target page is the first page or the second page, the search control 42 is configured to trigger to perform an object search.

In the present embodiment, when a page (including the target page) aggregated in the object page is displayed, a search control 42 may be displayed in the currently displayed page to facilitate object search by the user.

The fourth area may be located within the first area or outside the first area, i.e. the search control 42 may be displayed within the first area or outside the first area, may be flexibly set as desired. For example, when the target page is the second page, the fourth area may be located outside the first area. When the target page is other pages than the second page aggregated in the object page, the fourth area may be located within the first area. When the fourth area is located within and outside the first area, the search control may be displayed in the same or different display styles, for example, the search control may be displayed in different display styles. For example, when the search control is displayed within the first area, the search control may be displayed in a collapsed state. When the search control is displayed outside the first area, the search control may be displayed in an expanded state.

Exemplarily, when a triggering operation to display the object page is received, the currently displayed page is switched from the video playing page to the target page aggregated in the object page, the page identifier corresponding to the page aggregated in the object page is displayed in the first area 40 of the target page, and the search control 42 is displayed in the fourth area of the target page, as shown in FIGs. 4 and 5. Thus, when the current user desires to perform an object search, the search control 42 may be triggered to instruct the electronic device to display a search panel, to input a keyword that the user desires to search in an input box of the search panel and to perform a search operation, or to perform a search operation by triggering a keyword displayed in the search panel. Accordingly, the electronic device, upon receiving a search operation of the user, may search for an object matching a keyword input or triggered by the user and present a search result. The search result may include, but is not limited to, at least one of the object information and the object recommendation video of the object matching the keyword input or triggered by the user.

In an implementation, the fourth area of the target page is located outside the first area of the target page, the method for page display provided by the present embodiment further includes: in response to a first sliding operation acting within a main display area of the target page, controlling the search control to move with the first sliding operation; and incrementally displaying the search control in a first area of the target page in response to the search control moving outside of the main display area of the target page.

The first sliding operation may be a sliding operation in a preset direction, such as a vertical sliding operation. The search control may have the same or different display styles in the first area of the target page and in the fourth area of the target page, optionally the search control may have different display styles in the first area of the target page and in the fourth area of the target page.

In the above implementation, after the search control displayed in the fourth area moves out of the main display area of the currently displayed page, the search control may be incrementally displayed in the first area to facilitate object search by the user.

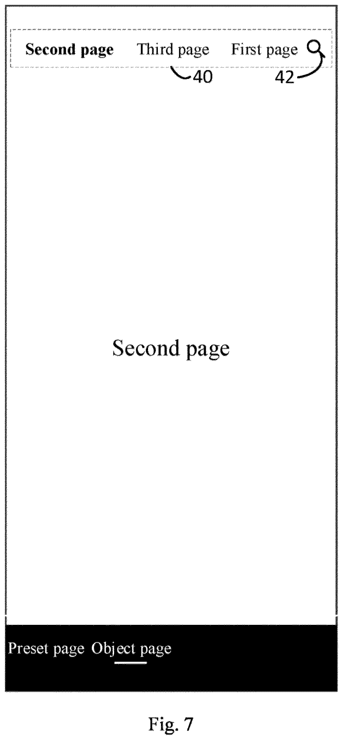

Illustratively, as shown in Fig. 5, the electronic device displays the search control 42 outside the first area of the target page. Thus, the user may perform the first sliding operation when he wants to switch the content displayed in the main display area of the target page. Accordingly, the electronic device, upon receiving the first sliding operation of the user, may control the content (including the search control 42) displayed in the main display area to move with the sliding direction of the first sliding operation. After the search control 42 moves out of the main display area of the target page, such as when preset content in the target page moves to a preset position of the main display area of the target page (at which time the search control 42 has moved out of the main display area of the target page), the search control 42 may be incrementally displayed in the first area of the target page, as shown in Fig. 7, to ensure that the user can perform an object search by triggering the search control 42 displayed in the page when viewing different content in the main display area.

Further, after the search control 42 is incrementally displayed in the first area, if the search control 42 displayed in the fourth area is moved back to the main display area of the target page based on the user's first sliding operation, the display of the search control 42 in the first area may be cancelled.

S203, in response to a second sliding operation acting within the main display area of the target page, switching a currently displayed page in a sliding direction of the sliding operation and in an arrangement order of the page identifiers in the first area.

The second sliding operation may be an operation in a sliding direction different from that of the first sliding operation, such as when the first sliding operation is a vertical sliding operation, the second sliding operation may be a lateral sliding operation.

In the present embodiment, the page which is currently displayed and aggregated in the object page, may be switched based on the second sliding operation by the user.

Illustratively, when a page (including the target page) aggregated in the object page is displayed, if a second sliding operation acting on the main display area of the page is received, the currently displayed page may be switched to a page in the first area whose corresponding page identifier is adjacent to the page identifier of the page. As shown in Fig. 4, assuming that the target page is a first page, when a leftward/rightward slide of the current user in the first page is detected, the currently displayed page may be switched from the first page to a second page. As shown in Fig. 5, assuming that the target page is the second page, when a leftward/rightward slide of the current user in the first page is detected, the currently displayed page may be switched from the second page to the third page.

Further, when other pages other than the target page aggregated in the object page are displayed, the currently displayed page may also be switched based on the user's second sliding operation. For example, assuming that a first page, a second page, and a third page are aggregated in the object page, page identifiers of the plurality of pages are arranged in the order of the second page, the third page, and the first page in the first area, and assuming that the currently displayed page is the third page, when detecting that the current user slides leftward in the main display area of the third page, the currently displayed page may be switched from the third page to the first page. When detecting that the current user slides rightward in the main display area of the third page, the current display page may be switched from the third page to the second page.

S204, in response to a click operation for any a page identifier displayed in the first area, displaying a page corresponding to the page identifier on which the click operation acts.

In the present embodiment, the currently displayed page may further be switched based on the click operation of the user for the page identifier.

Illustratively, when a page (including the target page) aggregated in the object page is displayed, if it is detected that the user clicks on the page identifier displayed in the first area, the page corresponding to the page identifier may be displayed, such as when the page identifier clicked by the user is the same as the page identifier corresponding to the currently displayed page, the currently displayed page may be kept displayed. When the page identifier clicked by the user is not identical to the page identifier corresponding to the currently displayed page, the currently displayed page may be switched to the page corresponding to the page identifier clicked by the user.

In the present embodiment, when displaying the page aggregated in the obj ect page, at least one of the following controls: the first list control, the second list control, and a control for triggering to display the second list control may also be displayed in the first area, so that the current user performs at least one of the following operations: viewing the user's own first object list by triggering the first list control, and viewing the user's own second object list by triggering the second list control.

The first list control may be understood as a control for triggering to display a first object list of the current user. The second list control may be understood as a control for triggering to display a second object list of the current user. The first object list and the second object list may be different object lists, for example, the first object list may be configured to show objects to be purchased added to the list by the current user. The second object list may be configured to show objects that have been purchased by the current user (i.e., purchased objects). The first/second object list may be displayed in the page where the first/second list control is located or in other pages than the page.

In an implementation, in response to the currently displayed page being the second page, at least one of a first list control and a control configured to trigger to display a second list control is further displayed in the first area of the second page, the first list control is configured to trigger to display a first object list of the current user, and the second list control is configured to trigger to display a second object list of the current user.

In the above implementation, when the second page is displayed, at least one of the first list control and a more control may be displayed in the first area in addition to displaying the page identifier corresponding to the page aggregated in the object page in the first area of the second page. Thus, when a current user is detected to trigger the first list control, a first object list of the current user may be displayed. When the current user is detected to trigger the more control, a second list control may be displayed, and a second object list of the current user is displayed when the user is detected to trigger the second list control.

It is to be understood that when it is detected that the user triggers the more control, other controls, such as a coupon control, may be displayed in addition to the second list control, so that the current user may view the coupons received by himself by triggering the coupon control.

In another implementation, in response to the currently displayed page being the second page, at least one of a first list control and a second list control is further displayed in the first area of the second page, the first list control is configured to trigger to display a first object list of the current user, and the second list control is configured to trigger to display a second object list of the current user.

In the above implementation, when the second page is displayed, at least one of the first list control and the second list control may be displayed in the first area in addition to displaying the page identifier corresponding to the page aggregated in the object page in the first area of the second page. Thus, when it is detected that the current user triggers the first list control, a first object list of the current user may be displayed. When it is detected that the user triggers the second list control, a second object list of the current user may be displayed.

The method for page display provided by the present embodiment, when switching from a video playing page to a target page aggregated in an object page, displays a page identifier of a page aggregated in the object page and a search control in the first area of the target page, so that a user can view different pages related to an object or perform an object search by a simple triggering operation, and can simplify operations required for a user to view or search contents related to an object, and improve user experience.

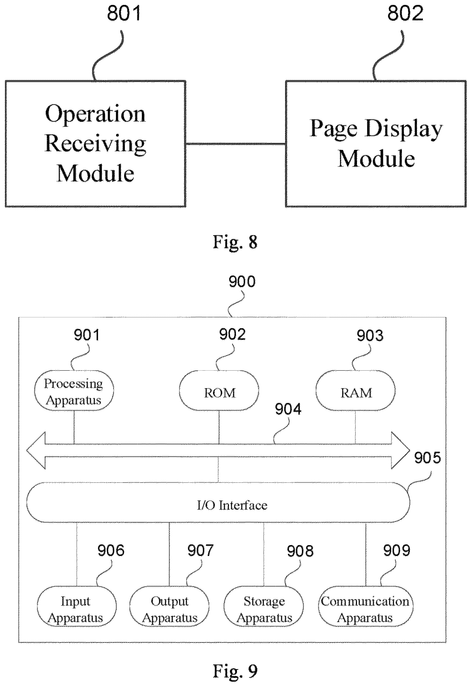

Fig. 8 is a structural block diagram of an apparatus for page display provided in an embodiment of the present disclosure. The apparatus may be implemented by at least one of software and hardware, and may be configured in an electronic device, typically, a mobile phone or a tablet computer, and may display a page associated with an object by executing a method for page display. As shown in Fig. 8, the apparatus for page display provided by the present embodiment may include: an operation receiving module 801 and a page display module 802.

The operation receiving module 801 is configured to receive a triggering operation acting on a video playing page, where the triggering operation is configured to instruct to display an object page, a first page and a second page are aggregated in the object page, the first page is configured to play an object recommendation video and the second page is configured to present object information and first virtual item information associated with the object information.

The page display module 802 is configured to, in response to the triggering operation, switch a current display page from the video playing page to a target page aggregated in the object page and display page identifiers of at least two pages aggregated in the object page in a first area of the target page, the target page being the first page or the second page.

The apparatus for page display provided by the present embodiment, receiving a triggering operation acting on a video playing page by the operation receiving module, where the triggering operation is configured to instruct to display an object page, a first page and a second page are aggregated in the object page, the first page is configured to play an object recommendation video and the second page is configured to present object information and first virtual item information associated with the object information; and by the page display module, in response to the triggering operation, switching a current display page from the video playing page to a target page aggregated in the object page, and displaying page identifiers of at least two pages aggregated in the object page in a first area of the target page, where the target page is the first page or the second page. The present embodiment, by adopting the above technical solution, aggregates a plurality of pages related to an object into an object page, and switches displaying the object page upon receiving a corresponding triggering operation acting on a video playing page, enables simplifying an operation required for switching into a page related to an object, and improves user experience.

In the above solution, the video playing page may be aggregated in the preset page, and the triggering operation may act on the object page identifier, and the object page identifier may be displayed in the second area in which the page identifier of the video playing page is located, or in the third area where the page identifier of the preset page is located.

In the above solution, the object page identifier may be displayed in the second area, and the page display module 802 may be configured to display a return control and page identifiers of pages aggregated in the object page in the first area of the target page, and the return control is configured to trigger to display the video playing page.

In the above solution, the page display module 802 may be configured to display page identifiers of pages aggregated in the object page in the first area of the target page, and to display a search control in a fourth area of the target page, and the search control is configured to trigger to perform an object search.

In the above solution, the fourth area of the target page may be located outside the first area of the target page, and the apparatus for page display provided by the present embodiment may further include: a movement control module configured to, in response to a first sliding operation acting within a main display area of the target page, control the search control to move with the first sliding operation; and a control display module configured to incrementally display the search control in a first area of the target page in response to the search control moving outside of the main display area of the target page.

In the above solution, the search control may have different display styles in the first area of the target page and in the fourth area of the target page.

Illustratively, the apparatus for page display provided by the present embodiment may further include: a page switching module configured to, after displaying page identifiers of at least two pages aggregated in the object page in the first area of the target page, perform at least one of: in response to a second sliding operation acting within the main display area of the target page, switching a currently displayed page in a sliding direction of the sliding operation and in an arrangement order of the page identifiers in the first area; or in response to a click operation for any a page identifier displayed in the first area, displaying a page corresponding to the page identifier on which the click operation acts.

In the above solution, in response to the currently displayed page being the second page, at least one of a first list control and a more control may further displayed in the first area of the second page, the more control is configured to trigger to display a second list control; Alternatively, in response to the currently displayed page being the second page, at least one of the first list control and the second list control may be further displayed in the first area of the second page, where the first list control is configured to trigger to display a first object list of a current user, and the second list control is configured to trigger to display a second object list of the current user.

In the above solution, the second virtual item information to be collected may further be displayed in the second page.

In the above solution, a third page may be further aggregated in the object page, and the third page may be configured to present an object recommendation video published by a target associated user who is an associated user of the current user.

The apparatus for page display provided by the embodiment of the present disclosure may perform the method for page display provided by any embodiment of the present disclosure, and has corresponding functional modules and effects to perform the method for page display. Technical details, which are not elaborately described in the present embodiment, can be referred to the method for page display provided by any embodiment of the present disclosure.

Fig. 9 is specifically referred below, and it shows the structural schematic diagram suitable for achieving the electronic device (e.g. terminal device) 900 in the embodiment of the present disclosure. The terminal device in the embodiment of the present disclosure may include but not limited to a mobile terminal such as a mobile phone, a notebook computer, a digital broadcasting receiver, a personal digital assistant (PDA), a portable android device (PAD), a portable multimedia player (PMP), a vehicle terminal (such as a vehicle navigation terminal), and a fixed terminal such as a digital television (TV) and a desktop computer. The electronic device 900 shown in Fig. 9 is only an example and should not bring any limitation to the scope of functionality and use of embodiments of the present disclosure.

As shown in Fig. 9, the electronic device 900 may include a processing apparatus (such as a central processing unit, and a graphics processor) 901, the processing apparatus 901 may execute a plurality of appropriate actions and processes according to a program stored in a read-only memory (ROM) 902 or a program loaded from a storage apparatus 908 to a random-access memory (RAM) 903. In RAM 903, a plurality of programs and data required for operations of the electronic device 900 are also stored. The processing apparatus 901, ROM 902, and RAM 903 are connected to each other by a bus 904. An input/output (I/O) interface 905 is also connected to the bus 904.

Typically, the following apparatuses may be connected to the I/O interface 905: an input apparatus 906 such as a touch screen, a touchpad, a keyboard, a mouse, a camera, a microphone, an accelerometer, and a gyroscope; an output apparatus 907 such as a liquid crystal display (LCD), a loudspeaker, and a vibrator; a storage apparatus 908 such as a magnetic tape, and a hard disk drive; and a communication apparatus 909. The communication apparatus 909 may allow the electronic device 900 to wireless-communicate or wire-communicate with other devices so as to exchange data. Although Fig. 9 shows the electronic device 900 with a plurality of apparatuses, it is not required to implement or possess all the apparatuses shown. Alternatively, it may implement or possess the more or less apparatuses.

In particular, according to the embodiment of the present disclosure, the process described above with reference to the flowchart may be achieved as a computer software program. For example, an embodiment of the present disclosure includes a computer program product, it includes a computer program carried on a non-transitory computer-readable storage medium, and the computer program includes program codes for executing the method shown in the flowchart. In such an embodiment, the computer program may be downloaded and installed from the network by the communication apparatus 909, or installed from the storage apparatus 908, or installed from ROM 902. When the computer program is executed by the processing apparatus 901, the above functions defined in the method in the embodiments of the present disclosure are executed.

It should be noted that the above computer-readable medium in the present disclosure may be a computer-readable signal medium, a computer-readable storage medium, or any combinations of the two. The computer-readable storage medium may be, but not limited to, for example, a system, an apparatus or a device of electricity, magnetism, light, electromagnetism, infrared, or semiconductor, or any combinations of the above. More examples of the computer-readable storage medium may include but not limited to: an electric connector with at least one wire, a portable computer magnetic disk, a hard disk drive, a RAM, a ROM, an erasable programmable read-only memory (EPROM) or a flash memory, an optical fiber, a compact disk read-only memory (CD-ROM), an optical storage device, a magnetic storage device or any suitable combinations of the above. In the present disclosure, the computer-readable storage medium may be any visible medium that contains or stores a program, and the program may be used by an instruction executive system, apparatus or device or used in combination with it. In the present disclosure, the computer-readable signal medium may include a data signal propagated in a baseband or as a part of a carrier wave, it carries the computer-readable program code. The data signal propagated in this way may adopt a plurality of forms, including but not limited to an electromagnetic signal, an optical signal, or suitable combinations of the above. The computer-readable signal medium may also be any computer-readable storage medium other than the computer-readable storage medium, and the computer-readable signal medium may send, propagate, or transmit the program used by the instruction executive system, apparatus or device or in combination with it. The program code contained on the computer-readable storage medium may be transmitted by using any suitable medium, including but not limited to: a wire, an optical cable, a radio frequency (RF) or the like, or any suitable combinations of the above.

In an implementation, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable storage medium may be included in the electronic device described above, or may exist alone without being assembled into the electronic device.

The above-mentioned computer-readable storage medium carries at least one program which, when executed by the electronic device, causes the electronic device to: receive a triggering operation acting on a video playing page, where the triggering operation is configured to instruct to display an object page, a first page and a second page are aggregated in the object page, the first page is configured to play an object recommendation video and the second page is configured to present object information and first virtual item information associated with the object information; and in response to the triggering operation, switch a current display page from the video playing page to a target page aggregated in the object page, and display page identifiers of at least two pages aggregated in the object page in a first area of the target page, the target page being the first page or the second page.

The computer program code for executing the operation of the present disclosure may be written in at least one programming languages or combinations thereof, the above programming language includes but not limited to object-oriented programming languages such as Java, Smalltalk, and C++, and also includes conventional procedural programming languages such as a "C" language or a similar programming language. The program code may be completely executed on the user's computer, partially executed on the user's computer, executed as a standalone software package, partially executed on the user's computer and partially executed on a remote computer, or completely executed on the remote computer or server. In the case involving the remote computer, the remote computer may be connected to the user's computer by any types of networks, including LAN or WAN, or may be connected to an external computer (such as connected by using an internet service provider through the Internet).

The flowcharts and the block diagrams in the drawings show possibly achieved system architectures, functions, and operations of systems, methods, and computer program products according to a plurality of embodiments of the present disclosure. At this point, each box in the flowchart or the block diagram may represent a module, a program segment, or a part of a code, the module, the program segment, or a part of the code contains at least one executable instruction for achieving the specified logical functions. It should also be noted that in some alternative implementations, the function indicated in the box may also occur in a different order from those indicated in the drawings. For example, two consecutively represented boxes may actually be executed basically in parallel, and sometimes it may also be executed in an opposite order, this depends on the function involved. It should also be noted that each box in the block diagram and/or the flowchart, as well as combinations of the boxes in the block diagram and/or the flowchart, may be achieved by using a dedicated hardware-based system that performs the specified function or operation, or may be achieved by using combinations of dedicated hardware and computer programs.

The functions described above in this article may be at least partially executed by at least one hardware logic component. For example, exemplary types of the hardware logic component that may be used include: a field programmable gate array (FPGA), an application specific integrated circuit (ASIC), an application specific standard part (ASSP), a system on chip (SOC), a complex programmable logic device (CPLD) and the like.

In the context of the present disclosure, the machine-readable medium may be a visible medium, and it may contain or store a program for use by or in combination with an instruction executive system, apparatus, or device. The machine-readable medium may be a machine-readable signal medium or a machine-readable storage medium. The machine-readable medium may include but not limited to an electronic, magnetic, optical, electromagnetic, infrared, or semiconductor system, apparatus, or device, or any suitable combinations of the above. More specific examples of the machine-readable storage medium may include an electric connector based on at least one wire, a portable computer disk, a hard disk drive, RAM, ROM, EPROM (or a flash memory), an optical fiber, CD-ROM, an optical storage device, a magnetic storage device, or any suitable combinations of the above.

According to one or more embodiments of the present disclosure, Example 1 provides a method for page display, including:
receiving a triggering operation acting on a video playing page, where the triggering operation is configured to instruct to display an object page, a first page and a second page are aggregated in the object page, the first page is configured to play an object recommendation video and the second page is configured to present object information and first virtual item information associated with the object information;
in response to the triggering operation, switching a current display page from the video playing page to a target page aggregated in the object page, and displaying page identifiers of at least two pages aggregated in the object page in a first area of the target page, the target page being the first page or the second page.

According to one or more embodiments of the present disclosure, Example 2 provides the method according to Example 1, where the video playing page is aggregated in a preset page, the triggering operation acts on an object page identifier, the object page identifier is displayed in a second area in which a page identifier of the video playing page is located or in a third area in which a page identifier of the preset page is located.

According to one or more embodiments of the present disclosure, Example 3 provides the method according to Example 2, the object page identifier being displayed in the second area, the displaying page identifiers of at least two pages aggregated in the object page in a first area of the target page including:
displaying a return control and page identifiers of pages aggregated in the object page in the first area of the target page, where the return control is configured to trigger to display the video playing page.

According to one or more embodiments of the present disclosure, Example 4 provides the method according to Example 1, the displaying page identifiers of at least two pages aggregated in the object page in a first area of the target page including:
displaying page identifiers of pages aggregated in the object page in the first area of the target page, and displaying a search control in a fourth area of the target page, the search control is configured to trigger to perform an object search.

According to one or more embodiments of the present disclosure, Example 5 provides the method according to Example 4, the fourth area of the target page being located outside the first area of the target page, the method further including:
in response to a first sliding operation acting within a main display area of the target page, controlling the search control to move with the first sliding operation; and
incrementally displaying the search control in the first area of the target page in response to the search control moving outside of a main display area of the target page.

According to one or more embodiments of the present disclosure, Example 6 provides the method according to Example 5, the search control having different display styles in the first area of the target page and in the fourth area of the target page.

According to one or more embodiments of the present disclosure, Example 7 provides the method according to any one of Examples 1-6, after the displaying page identifiers of at least two pages aggregated in the object page in a first area of the target page, further including at least one of:
in response to a second sliding operation acting within the main display area of the target page, switching a currently displayed page in a sliding direction of the sliding operation and in an arrangement order of the page identifiers in the first area; and
in response to a click operation for any a page identifier displayed in the first area, displaying a page corresponding to the page identifier on which the click operation acts.

According to one or more embodiments of the present disclosure, Example 8 provides the method according to Example 7, where
in response to the currently displayed page being the second page, at least one of a first list control and a more control is further displayed in the first area of the second page, the more control is configured to trigger to display the second list control; or
in response to the currently displayed page being the second page, at least one of a first list control and a second list control is further displayed in the first area of the second page,
where the first list control is configured to trigger to display a first object list of a current user, and the second list control is configured to trigger to display a second object list of the current user.

According to one or more embodiments of the present disclosure, Example 9 provides the method according to any one of Examples 1-6, where second virtual item information to be collected is further displayed in the second page.

According to one or more embodiments of the present disclosure, Example 10 provides the method according to any one of Examples 1-6, where a third page is further aggregated in the object page, the third page is configured to present an object recommendation video published by a target associated user, and the target associated user is an associated user of the current user.

According to one or more embodiments of the present disclosure, Example 11 provides an apparatus for page display, including:
an operation receiving module, configured to receive a triggering operation acting on a video playing page, where the triggering operation is configured to instruct to display an object page, a first page and a second page are aggregated in the object page, the first page is configured to play an object recommendation video and the second page is configured to present object information and first virtual item information associated with the object information; and
a page display module, configured to, in response to the triggering operation, switch a current display page from the video playing page to a target page aggregated in the object page and display page identifiers of at least two pages aggregated in the object page in a first area of the target page, where the target page is the first page or the second page.

According to one or more embodiments of the present disclosure, Example 12 provides an electronic device, including:
at least one processor;
a memory configured to store at least one program,
the at least one program, upon executed by the at least one processor, causing the at least one processor to implement the method for page display according to any one of Examples 1-10.

According to one or more embodiments of the present disclosure, Example 13 provides a computer-readable storage medium storing computer instructions, where the computer instructions upon being executed by a processor, implement the method for page display according to any one of Examples 1-10.

According to one or more embodiments of the present disclosure, Example 14 provides a computer program product that, when executed by a computer, implements the method for page display according to any one of Examples 1-10.

## Claims

1. A method for page display, comprising:
receiving a triggering operation acting on a video playing page, wherein the triggering operation is configured to instruct to display an object page, a first page and a second page are aggregated in the object page, the first page is configured to play an object recommendation video and the second page is configured to present object information and first virtual item information associated with the object information; and
in response to the triggering operation, switching a current display page from the video playing page to a target page aggregated in the object page, and displaying page identifiers of at least two pages aggregated in the object page in a first area (40) of the target page, wherein the target page is the first page or the second page.

2. The method of claim 1, wherein the video playing page is aggregated in a preset page, the triggering operation acts on an object page identifier, the object page identifier is displayed in a second area (20) in which a page identifier of the video playing page is located or in a third area (21) in which a page identifier of the preset page is located.

3. The method of claim 2, wherein the object page identifier is displayed in the second area (20), the displaying page identifiers of at least two pages aggregated in the object page in a first area (40) of the target page comprising:
displaying a return control (41) and page identifiers of pages aggregated in the object page in the first area (40) of the target page, wherein the return control (41) is configured to trigger to display the video playing page.

4. The method of claim 1, wherein the displaying page identifiers of at least two pages aggregated in the object page in a first area (40) of the target page comprises:
displaying page identifiers of pages aggregated in the object page in the first area (40) of the target page, and displaying a search control (42) in a fourth area of the target page, the search control (42) is configured to trigger to perform an object search.

5. The method of claim 4, wherein the fourth area of the target page is located outside the first area (40) of the target page, and the method further comprises:
in response to a first sliding operation acting within a main display area of the target page, controlling the search control (42) to move with the first sliding operation; and
in response to the search control (42) moving outside of the main display area of the target page, incrementally displaying the search control (42) in the first area (40) of the target page.

6. The method of claim 5, wherein the search control (42) has different display styles in the first area (40) of the target page and in the fourth area of the target page.

7. The method of any one of claims 1-6, after the displaying page identifiers of at least two pages aggregated in the object page in a first area (40) of the target page, further comprising at least one of:
in response to a second sliding operation acting within the main display area of the target page, switching a currently displayed page in a sliding direction of the sliding operation and in an arrangement order of the page identifiers in the first area (40); or
in response to a click operation for any a page identifier displayed in the first area (40), displaying a page corresponding to the page identifier on which the click operation acts.

8. The method of claim 7, wherein
in response to the currently displayed page being the second page, at least one of a first list control and a control configured to trigger to display a second list control is further displayed in the first area (40) of the second page; or
in response to the currently displayed page being the second page, at least one of the first list control and the second list control is further displayed in the first area (40) of the second page,
wherein the first list control is configured to trigger to display a first object list of a current user, and the second list control is configured to trigger to display a second object list of the current user.

9. The method of any one of claims 1-6, wherein second virtual item information to be collected is further displayed in the second page.

10. The method of any one of claims 1-6, wherein a third page is further aggregated in the object page, the third page is configured to present an object recommendation video published by a target associated user, and the target associated user is an associated user of the current user.

11. An apparatus for page display, comprising:
an operation receiving module (801), configured to receive a triggering operation acting on a video playing page, wherein the triggering operation is configured to instruct to display an object page, a first page and a second page are aggregated in the object page, the first page is configured to play an object recommendation video and the second page is configured to present object information and first virtual item information associated with the object information; and
a page display module (802), configured to, in response to the triggering operation, switch a current display page from the video playing page to a target page aggregated in the object page and display page identifiers of at least two pages aggregated in the object page in a first area (40) of the target page, wherein the target page is the first page or the second page.

12. An electronic device, comprising:
at least one processor; and
a memory communicatively connected with the at least one processor,
wherein the memory stores computer programs executable by the at least one processor, and the computer programs are executed by the at least one processor to enable the at least one processor to perform the method for page display according to any one of claims 1-10.

13. A computer-readable storage medium, storing computer programs, wherein the computer instructions upon being executed by a processor, implement the method for page display according to any one of claims 1-9.

14. A computer program product, comprising computer programs, wherein the computer programs upon being executed by a processor, implement the method for page display according to any one of claims 1-9.
